# FASCICULE DE BREVET EUROPEEN

(11) **EP 3 548 837 B1**
(45) Date de publication et mention de la délivrance du brevet: **30.08.2023**
(21) Numéro de dépôt: 17821969.7
(22) Date de dépôt: 28.11.2017
(51) Int. Cl.: G01B 11/06, G01B 11/12, G01B 11/22

(54) **PROCÉDÉ ET DISPOSITIF DE DÉTECTION ET D'ÉVALUATION D'UNE VARIATION D'ÉPAISSEUR D'UNE PIÈCE.**
VERFAHREN UND VORRICHTUNG ZUR ERKENNUNG UND BEWERTUNG EINER DICKENÄNDERUNG EINES WERKSTÜCKS
METHOD AND DEVICE FOR DETECTING AND ASSESSING A THICKNESS VARIATION OF A WORKPIECE

(30) Priorité: 02.12.2016 FR 1601713
(43) Date de publication de la demande: 09.10.2019
(73) Titulaire: ArianeGroup SAS, 78130 Les Mureaux (FR)
(72) Inventeur: BAILET Gilles, 75014 Paris (FR)
(74) Mandataire: Brevalex
(86) Numéro de dépôt international: PCT/FR2017/000222
(87) Numéro de publication internationale: WO 2018/100256

(56) Documents cités:
- GB-A- 1 461 700
- JP-A- 2010 025 805

## Description

La présente invention concerne un procédé et un dispositif de détection et d'évaluation d'une variation d'épaisseur d'une pièce.

Bien que non exclusivement, la présente invention s'applique plus particulièrement à une pièce correspondant à un élément (notamment un panneau) de protection thermique d'une plate-forme spatiale telle qu'un satellite. Lors de la rentrée atmosphérique d'une telle plate-forme, les panneaux de protection thermique se dégradent. Aussi, il peut être utile de pouvoir mesurer en temps réel l'épaisseur d'un tel panneau pour savoir s'il est toujours efficace.

De telles mesures d'épaisseur peuvent également être réalisées pour collecter des données relatives à l'usure produite lors de la rentrée atmosphérique, afin de pouvoir bien comprendre cet environnement, notamment dans le but de concevoir des éléments de protection thermique optimisés.

Les techniques usuelles de mesure de récession (c'est-à-dire de réduction d'épaisseur), de type intégré, se basent sur trois approches différentes : l'utilisation d'un alignement de thermocouples, la détection du flux radiatif impactant des fibres optiques lorsque la variation d'épaisseur de la pièce expose une ou plusieurs fibres optiques au milieu extérieur, ou bien la variation de longueur (ou d'épaisseur) d'un matériau dont on mesurera le potentiel électrique qui présente un taux de récession proche de celui de la pièce considérée.

La stratégie d'utilisation de thermocouple est basée sur un agencement de plusieurs thermocouples sur une ligne perpendiculaire à la surface de récession. Comme le front de récession passe par la position de chaque thermocouple, les jonctions (partie du thermocouple où la mesure est réalisée) permettent de retracer le déplacement d'un isotherme. Si les thermocouples sont choisis en fonction de la plage de température correcte, l'approche pourrait permettre de suivre le processus d'ablation. L'inconvénient de cette solution est l'impossibilité d'effectuer la mesure de récession lorsque le processus se produit à haute température (supérieure à 1700°C). Elle ne convient pas à la plupart des processus d'ablation. En outre, comme le nombre de points de mesure est discret, les processus non linéaires ne sont pas correctement pris en compte.

La seconde stratégie est basée sur l'utilisation de plusieurs fibres optiques disposées perpendiculairement à la surface de récession à différentes profondeurs. Chaque fois que la surface de récession atteint la fibre optique, une impulsion lumineuse (dans le milieu environnant) est détectée avant la fusion de la fibre optique (ce qui la rend opaque). Comme pour la stratégie précédente, cette technique très intrusive présente l'inconvénient de ne pas pouvoir mesurer des phénomènes de récession non-linéaires et ne convient pas à des températures élevées.

Quant à la stratégie de la variation de longueur d'un matériau avec un taux de récession proche de celui de la pièce considérée, elle prévoit d'intégrer dans le volume à mesurer une bobine en métal dont la longueur se réduit avec la récession de l'échantillon. Plus la récession de l'échantillon est importante plus le potentiel entre les deux parties de la bobine est important. Avec une bonne calibration, il est possible de retrouver la récession de la bobine. En assumant une température d'ablation assez élevé, il est possible d'obtenir la mesure de la récession de l'échantillon.

Toutefois, toutes ces méthodes usuelles sont hautement intrusives (grandes incertitudes, plus de 1mm/cm), et elles ne permettent pas de mesurer un gonflement de la pièce, c'est-à-dire une augmentation de l'épaisseur de la pièce.

En effet, en fonction des applications envisagées, il peut être utile de pouvoir mesurer, non seulement la réduction, mais également l'augmentation de l'épaisseur de la pièce.

GB 1 461 700 A décrit une méthode et un appareil pour mesurer la longueur d'un trou dans un substrat. JP 2010 025805 A décrit un appareil et une méthode de mesure de profondeur.

La présente invention a pour objet de remédier à ces inconvénients. Elle concerne un procédé au moins de détection, et de préférence d'évaluation d'une variation (augmentation ou réduction) de l'épaisseur d'une pièce.

Selon l'invention, ledit procédé est remarquable en ce que l'on pratique dans ladite pièce présentant une face dite externe, un canal de mesure traversant dont la longueur est égale à l'épaisseur de la pièce au niveau dudit canal de mesure, ledit canal de mesure traversant débouchant à une première extrémité dite externe au niveau de ladite face externe, et en ce que ledit procédé comprend :
- une étape de mesure consistant à mesurer au moins une intensité lumineuse en sortie du canal de mesure à une seconde extrémité dite interne opposée à ladite extrémité externe du canal de mesure, l'intensité lumineuse mesurée dépendant d'un angle de vue d'un rayonnement lumineux pénétrant dans le canal de mesure par ladite extrémité externe, ledit angle de vue dépendant de la longueur du canal de mesure traversant et donc de l'épaisseur de la pièce ;
- une étape de calcul consistant à calculer la différence entre ladite intensité lumineuse mesurée et une intensité lumineuse de référence ; et
- une étape de traitement consistant à détecter une variation de l'épaisseur de la pièce, lorsque la différence entre l'intensité lumineuse mesurée et l'intensité lumineuse de référence dépasse une valeur de seuil prédéterminée.

Ainsi, grâce à l'invention, on obtient une méthode non intrusive qui est en mesure au moins de détecter une variation de l'épaisseur d'une pièce surveillée, que cela soit une augmentation, ou une réduction.

Dans un mode de réalisation préféré, l'unité de traitement est configurée pas seulement pour détecter une variation, mais pour évaluer la longueur de la variation de l'épaisseur de la pièce (et donc l'épaisseur courante de la pièce), en fonction de la valeur et du signe de la différence (courante) calculée par l'unité de calcul. Ce mode de réalisation préféré permet d'obtenir une mesure très précise, en temps réel, de la variation d'épaisseur de la pièce, et ainsi de l'épaisseur courante de la pièce, comme précisé ci-dessous.

Avantageusement, l'étape de traitement consiste à conclure que :
- l'épaisseur de la pièce a augmenté lorsque l'intensité lumineuse mesurée est inférieure à l'intensité lumineuse de référence d'au moins ladite valeur de seuil ; et
- l'épaisseur de la pièce a diminué lorsque l'intensité lumineuse mesurée est supérieure à l'intensité lumineuse de référence d'au moins ladite valeur de seuil.

Dans un premier mode de réalisation (préféré), l'étape de mesure consiste à également mesurer l'intensité lumineuse de référence en sortie du canal de mesure. Dans ce cas, avantageusement, l'étape de mesure consiste à séparer le rayonnement lumineux en sortie du canal de mesure en deux faisceaux lumineux dits de mesure, l'intensité lumineuse de l'un des faisceaux lumineux de mesure étant mesurée directement comme intensité lumineuse mesurée, et l'intensité lumineuse de l'autre faisceaux lumineux de mesure étant mesurée, via un contrôle de l'angle de vue, comme intensité lumineuse de référence.

En outre, dans un second mode de réalisation (simplifié), adapté à une illumination constante, l'intensité lumineuse de référence utilisée à l'étape de traitement est une valeur prédéterminée.

La présente invention concerne également un dispositif de détection et d'évaluation d'une variation de l'épaisseur d'une pièce, le dispositif comprenant ladite pièce.

Selon l'invention, la pièce comporte :
- un canal de mesure traversant dont la longueur est égale à l'épaisseur de la pièce au niveau dudit canal de mesure, pratiqué dans ladite pièce et débouchant à une première extrémité dite externe au niveau d'une face externe de ladite pièce ; et le dispositif comporte :
   - au moins une unité de mesure configurée pour mesurer au moins une intensité lumineuse en sortie du canal de mesure à une seconde extrémité dite interne, opposée à ladite extrémité externe du canal de mesure, l'intensité lumineuse mesurée dépendant d'un angle de vue d'un rayonnement lumineux pénétrant dans le canal de mesure par ladite extrémité externe, ledit angle de vue dépendant de la longueur du canal de mesure traversant et donc de l'épaisseur de la pièce ;
   - une unité de calcul configurée pour calculer la différence entre ladite intensité lumineuse mesurée et une intensité lumineuse de référence ; et
   - une unité de traitement configurée pour détecter une variation de l'épaisseur de la pièce lorsque la différence entre l'intensité lumineuse mesurée et l'intensité lumineuse de référence dépasse une valeur de seuil prédéterminée.

De préférence, l'unité de traitement est configurée pour évaluer la longueur de la variation de l'épaisseur de la pièce, en fonction de la valeur et du signe de la différence calculée par l'unité de calcul.

Dans un premier mode de réalisation (préféré), le dispositif comporte un miroir semi-réfléchissant configuré pour séparer le rayonnement lumineux sortant du canal de mesure en deux faisceaux lumineux dits de mesure, dont l'un est dirigé vers ladite unité de mesure et dont l'autre est dirigé vers une unité de mesure auxiliaire configurée pour mesurer l'intensité lumineuse de référence.

Dans une variante de réalisation (simplifiée), le dispositif comporte une mémoire contenant au moins une valeur prédéterminée de l'intensité lumineuse de référence.

Par ailleurs, dans un mode de réalisation particulier, l'unité de mesure et/ou l'unité de mesure auxiliaire comportent un spectromètre d'émission ou un photomètre.

Les figures annexées feront bien comprendre comment l'invention peut être réalisée. Sur ces figures, des références identiques désignent des éléments semblables.

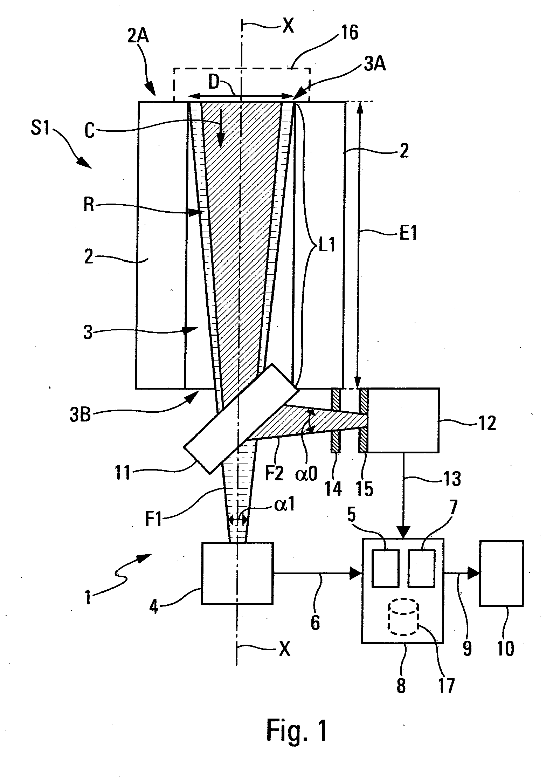

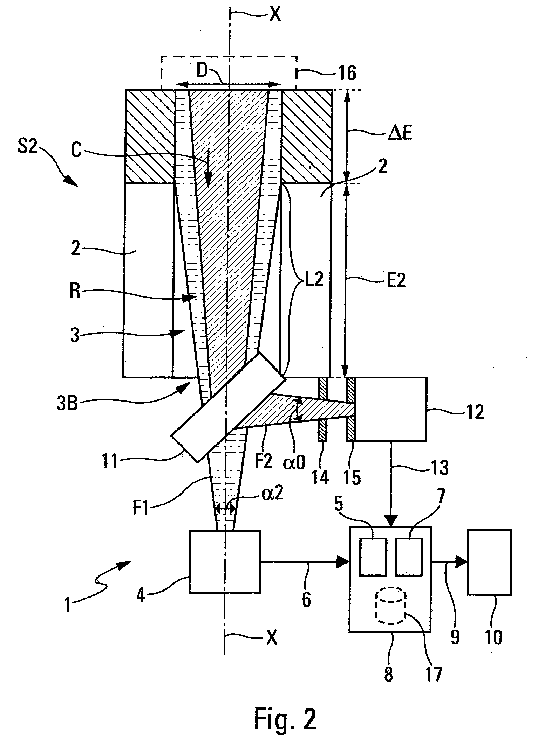

Les figures 1 et 2 montrent schématiquement un mode de réalisation particulier d'un dispositif d'évaluation d'épaisseur conforme à l'invention, pour deux épaisseurs différentes.

Le dispositif 1 permettant d'illustrer l'invention et représenté schématiquement sur les figures 1 et 2, est destiné tout au moins à détecter, et de préférence également à évaluer une variation de l'épaisseur d'une pièce 2.

A titre d'illustration, cette pièce 2 peut correspondre à un élément (notamment un panneau) de protection thermique d'une plate-forme spatiale telle qu'un satellite. Lors de la rentrée atmosphérique d'une telle plate-forme, un tel élément ou panneau de protection thermique peut se dégrader et son épaisseur peut diminuer. Aussi, une application possible du dispositif 1 peut consister à mesurer en temps réel l'épaisseur d'un tel élément ou panneau.

Selon l'invention, ledit dispositif 1 comporte :
- un canal de mesure 3 traversant, c'est-à-dire qui est pratiqué dans la pièce 2 en la traversant de part en part, le canal de mesure 3 débouchant à une extrémité 3A dite externe au niveau d'une face externe 2A de ladite pièce 2 ;
- au moins une unité de mesure 4 configurée pour mesurer au moins une intensité lumineuse en sortie du canal de mesure 3 à une seconde extrémité 3B dite interne, opposée à ladite extrémité externe 3A du canal de mesure 3. L'intensité lumineuse mesurée à la sortie du canal de mesure 3 dépend d'un angle de vue α1, α2 d'un rayonnement lumineux R pénétrant dans le canal de mesure 3 par ladite extrémité externe 3A dans le sens illustré par une flèche C. L'angle de vue α1, α2 dépend de la longueur L1, L2 du canal de mesure 3 de type traversant et donc de l'épaisseur E1, E2 de la pièce 2;
- une unité de calcul 5 qui est reliée par l'intermédiaire d'une liaison 6 à l'unité de mesure 4 et qui est configurée pour calculer la différence entre ladite intensité lumineuse mesurée et une intensité lumineuse de référence précisée ci-dessous ; et
- une unité de traitement 7 configurée pour analyser cette différence.

Dans un mode de réalisation simplifié, l'unité de traitement 7 est configurée pour simplement détecter une variation de l'épaisseur de la pièce 2, lorsque la différence entre l'intensité lumineuse mesurée et l'intensité lumineuse de référence dépasse une valeur de seuil prédéterminée.

L'angle de vue α1, α2 correspond à l'angle maximum sous lequel l'unité de mesure 4 voit le rayonnement lumineux R pénétrant complètement dans le canal de mesure 3 par la face externe 2A.

Cette face externe 2A est une face par laquelle entre la lumière et qui est susceptible d'être soumise à des contraintes, notamment thermiques, mais également d'autre types (chimiques, mécaniques,...), aptes à modifier l'épaisseur E1, E2 de la pièce 2. Comme le canal de mesure 3 est traversant, la longueur L1, L2 dudit canal de mesure 3 selon un axe longitudinal X-X est égale à l'épaisseur E1, E2 de la pièce 2 au niveau dudit canal de mesure 3.

La valeur de l'angle de vue évolue en fonction de la récession ou sublimation (réduction d'épaisseur) ou du gonflement (augmentation d'épaisseur) de la pièce 2, c'est-à-dire de la longueur du canal de mesure 3.

Bien que non exclusivement, le canal de mesure 3 présente de préférence une forme cylindrique, de diamètre D et d'axe longitudinal X-X. L'épaisseur de la pièce 2 correspond à la longueur de cette dernière selon l'axe longitudinal X-X.

Ainsi, sur l'exemple de la figure 1 correspondant à une première situation S1, par exemple dans un état initial sans détérioration, la pièce 2 présente une épaisseur E1 qui est telle que la lumière pénétrant sur l'ensemble du diamètre D du canal de mesure 3 est vue d'un angle α1 par l'unité de mesure 4.

En outre, sur l'exemple de la figure 2 correspondant à une seconde situation S2, la pièce 2 présente une épaisseur E2 inférieure à l'épaisseur E1, due à une récession (ou réduction d'épaisseur), qui est telle que la lumière pénétrant sur l'ensemble du diamètre D est vue d'un angle α2 (supérieur à l'angle α1) par l'unité de mesure 4.

L'intensité lumineuse mesurée est donc plus importante dans la situation S2 de la figure 2 que dans la situation S1 de la figure 1.

L'évolution de la situation S1 de la figure 1 à la situation S2 de la figure 2 correspond donc à une réduction de l'épaisseur.

De façon similaire, l'évolution de la situation S2 de la figure 2 (dans l'hypothèse où cette dernière correspondrait à une situation initiale avec une épaisseur nominale) à la situation S1 de la figure 1 correspond à une augmentation de l'épaisseur.

L'unité de traitement 7 conclut donc que :
- l'épaisseur de la pièce 2 a augmenté, lorsque l'intensité lumineuse mesurée est inférieure à l'intensité lumineuse de référence d'au moins ladite valeur de seuil ; et
- l'épaisseur de la pièce 2 a diminué, lorsque l'intensité lumineuse mesurée est supérieure à l'intensité lumineuse de référence d'au moins ladite valeur de seuil.

Toutefois, dans un mode de réalisation préféré, l'unité de traitement 7 est configurée pour évaluer la longueur (ou valeur) de la variation ΔE de l'épaisseur de la pièce 2, en fonction de la valeur et du signe de la différence calculée par l'unité de calcul 5. Connaissant cette variation ΔE courante, ainsi que l'épaisseur initiale E1, l'unité de traitement 7 calcule l'épaisseur courante E2 qui est telle que E2 = E1 + ΔE.

Dans un mode de réalisation particulier, l'unité de calcul 6 et l'unité de traitement 7 font partie d'une unité centrale 8. De préférence, cette unité centrale 8 est reliée via une liaison 9 à un système utilisateur 10 qui utilise le résultat du traitement, notamment la valeur de l'épaisseur, fournie par l'unité de traitement 7.

Dans un mode de réalisation particulier, l'unité de mesure 4 de type OMD (« Optical Measurement Device » en anglais) comporte un spectromètre d'émission ou un photomètre.

Par ailleurs, dans le mode de réalisation préféré, représenté sur les figures 1 et 2, le dispositif 1 comporte un miroir semi-réfléchissant 11 qui est réalisé et agencé au niveau de l'axe X-X en sortie du canal de mesure 3 pour séparer le rayonnement lumineux R sortant du canal de mesure 3 en deux faisceaux lumineux F1, F2 dits de mesure. L'un F1 de ces faisceaux de mesure est dirigé vers l'unité de mesure 4, et l'autre faisceau de mesure F2 est dirigé vers une unité de mesure auxiliaire 12 qui est configurée pour mesurer l'intensité lumineuse de référence.

Cette unité de mesure auxiliaire 12 qui est de préférence similaire à l'unité de mesure 4 et qui est reliée par l'intermédiaire d'une liaison 13 à l'unité centrale 8 réalise des mesures d'intensité pour un faisceau lumineux F2 présentant un angle de vue α0 constant, servant de référence.

Pour ce faire, dans le mode de réalisation préféré représenté sur la figure 1, le dispositif 1 comporte un jeu de deux diaphragmes 14 et 15, qui est associé à l'unité de mesure auxiliaire 12 pour contrôler l'angle de vue, afin de toujours conserver le même angle de vue α0, pour que le dispositif 1 dispose d'une référence fiable. En variante, ont peut utiliser d'autres moyens que le jeu de diaphragmes, par exemple un élément conique, pour contrôler l'angle de vue.

La comparaison des mesures des deux unités de mesure 4 et 12 permet de réaliser des mesures, quelle que soit la façon dont l'intensité et la nature de la source lumineuse (illustrée par une référence 16) évoluent lors de la séquence de mesures. En effet, en plus de mesurer (avec l'unité de mesure 4) de façon courante (en temps réel) l'intensité lumineuse correspondant à la longueur effective du canal de mesure 3, on mesure également (avec l'unité de mesure auxiliaire 12) de façon courante (en temps réel) l'intensité lumineuse vue sous un angle de vue α0 constant pour le même rayon lumineux R (quelle que soit notamment son intensité).

Dans une variante de réalisation, au lieu d'utiliser un dispositif de mesure auxiliaire 12, le dispositif 1 comporte une mémoire 17 (représentée en traits interrompus sur les figures 1 et 2), contenant au moins une valeur prédéterminée de l'intensité lumineuse de référence. L'unité de traitement 7 utilise cette valeur enregistrée pour la comparer à l'intensité lumineuse mesurée par l'unité de mesure 4 afin de détecter et/ou évaluer l'épaisseur de la pièce 2. Dans cette variante, il convient de conserver les mêmes conditions d'illumination au cours des mesures, puisque la référence n'est pas mesurée en temps réel. La source lumineuse doit donc être constante et la valeur de référence doit être déterminée préalablement pour les mêmes conditions d'illumination.

Le dispositif 1, tel que décrit ci-dessus, permet des mesures embarquées de variation d'épaisseur (récession, sublimation et gonflement), aussi bien pour des effets linéaires que non-linéaires.

Le dispositif 1, bien que particulièrement approprié pour réaliser des mesures d'épaisseur d'une protection thermique d'un engin spatial lors d'une rentrée atmosphérique, peut être utilisé pour réaliser des mesures d'épaisseurs dans de nombreux autres domaines tels que, par exemple, la combustion d'ergol solide ou l'oxydation passive/active.

## Revendications

1. Procédé de détection et/ou d'évaluation d'une variation de l'épaisseur d'une pièce,
**caractérisé en ce que** l'on pratique dans ladite pièce (2) présentant une face (2A) dite externe un canal de mesure (3) traversant dont la longueur est égale à l'épaisseur (E1, E2) de la pièce (2) au niveau dudit canal de mesure (3), ledit canal de mesure (3) traversant débouchant à une première extrémité (3A) dite externe au niveau de ladite face externe (2A), et **en ce que** ledit procédé comprend :
- une étape de mesure consistant à mesurer au moins une intensité lumineuse en sortie du canal de mesure (3) à une seconde extrémité (3B) dite interne, opposée à ladite extrémité externe (3A) du canal de mesure (3), l'intensité lumineuse mesurée dépendant d'un angle de vue (α1, a2) d'un rayonnement lumineux (R) pénétrant dans le canal de mesure (3) par ladite extrémité externe (3A), ledit angle de vue (α1, a2) dépendant de la longueur (L1, L2) du canal de mesure (3) traversant et donc de l'épaisseur (E1, E2) de la pièce (2) ;
- une étape de calcul consistant à calculer la différence entre ladite intensité lumineuse mesurée et une intensité lumineuse de référence ; et
- une étape de traitement consistant à détecter une variation (ΔE) de l'épaisseur de la pièce (2), lorsque la différence entre l'intensité lumineuse mesurée et l'intensité lumineuse de référence dépasse une valeur de seuil prédéterminée.

2. Procédé selon la revendication 1,
**caractérisé en ce que** l'étape de mesure consiste à également mesurer l'intensité lumineuse de référence en sortie du canal de mesure (3).

3. Procédé selon la revendication 2,
**caractérisé en ce que** l'étape de mesure consiste à séparer le rayonnement lumineux (R) en sortie du canal de mesure (3) en deux faisceaux lumineux (F1, F2) dits de mesure, l'intensité lumineuse de l'un (F1) des faisceaux lumineux de mesure étant mesurée directement comme intensité lumineuse mesurée, et l'intensité lumineuse de l'autre faisceau lumineux (F2) de mesure étant mesurée via un contrôle de l'angle de vue comme intensité lumineuse de référence.

4. Procédé selon la revendication 1,
**caractérisé en ce que** l'intensité lumineuse de référence utilisée à l'étape de traitement est une valeur prédéterminée.

5. Procédé selon l'une quelconque des revendications précédentes, **caractérisé en ce que** l'étape de traitement consiste à conclure que :
- l'épaisseur de la pièce (2) a augmenté lorsque l'intensité lumineuse mesurée est inférieure à l'intensité lumineuse de référence d'au moins ladite valeur de seuil ; et
- l'épaisseur de la pièce (2) a diminué lorsque l'intensité lumineuse mesurée est supérieure à l'intensité lumineuse de référence d'au moins ladite valeur de seuil.

6. Procédé selon l'une quelconque des revendications précédentes, **caractérisé en ce que** l'étape de traitement consiste à évaluer la longueur de la variation de l'épaisseur de la pièce (2), en fonction de la valeur et du signe de la différence calculée à l'étape de calcul.

7. Dispositif (1) de détection et/ou d'évaluation d'une variation de l'épaisseur d'une pièce, le dispositif comprenant ladite pièce,
**caractérisé en ce que** la pièce comporte un canal de mesure (3) traversant dont la longueur est égale à l'épaisseur (E1, E2) de la pièce (2) au niveau dudit canal de mesure (3), pratiqué dans ladite pièce (2) et débouchant à une première extrémité (3A) dite externe au niveau d'une face externe (2A) de ladite pièce (2); et **en ce que** le dispositif comporte :
- au moins une unité de mesure (4) configurée pour mesurer au moins une intensité lumineuse en sortie du canal de mesure (3) à une seconde extrémité (3B) dite interne, opposée à ladite extrémité externe (3A) du canal de mesure (3), l'intensité lumineuse mesurée dépendant d'un angle de vue (α1, a2) d'un rayonnement lumineux (R) pénétrant dans le canal de mesure (3) par ladite extrémité externe (3A), ledit angle de vue (α1, a2) dépendant de la longueur (L1, L2) du canal de mesure (3) traversant et donc de l'épaisseur (E1, E2) de la pièce (2) ;
- une unité de calcul (5) configurée pour calculer la différence entre ladite intensité lumineuse mesurée et une intensité lumineuse de référence ; et
- une unité de traitement (7) configurée pour détecter une variation (ΔE) de l'épaisseur de la pièce (2), lorsque la différence entre l'intensité lumineuse mesurée et l'intensité lumineuse de référence dépasse une valeur de seuil prédéterminée.

8. Dispositif selon la revendication 7,
**caractérisé en ce que** l'unité de traitement (7) est configurée pour évaluer la longueur de la variation de l'épaisseur de la pièce (2), en fonction de la valeur et du signe de la différence calculée par l'unité de calcul (5).

9. Dispositif selon l'une des revendications 7 et 8,
**caractérisé en ce que** l'unité de mesure (4) comporte un spectromètre d'émission ou un photomètre.

10. Dispositif selon l'une des revendications 7 à 9,
caractérisé en qu'il comporte un miroir semi-réfléchissant (11) configuré pour séparer le rayonnement lumineux (R) sortant du canal de mesure (3) en deux faisceaux lumineux (F1, F2) dits de mesure, dont l'un (F1 ) est dirigé vers ladite unité de mesure (4) et dont l'autre (F2) est dirigé vers une unité de mesure auxiliaire (12) configurée pour mesurer l'intensité lumineuse de référence.

11. Dispositif selon l'une des revendications 7 à 9,
caractérisé en qu'il comporte une mémoire (17) contenant au moins une valeur prédéterminée de l'intensité lumineuse de référence.

## Patentansprüche

1. Verfahren zur Erfassung und/oder Bewertung einer Veränderung der Dicke eines Werkstücks,
**dadurch gekennzeichnet, dass** im Werkstück (2), das eine Fläche (2A), äußere genannt, aufweist, ein durchgehender Messkanal (3) ausgeführt wird, dessen Länge gleich der Dicke (E1, E2) des Werkstücks (2) im Bereich des Messkanals (3) ist, wobei der durchgehende Messkanal (3) an einem ersten Ende (3A), äußeres genannt, im Bereich der äußeren Fläche (2A), ausmündet, und dass das Verfahren umfasst:
- Einen Messschritt, der darin besteht, mindestens eine Lichtintensität am Ausgang des Messkanals (3) an einem zweiten Ende (3B), inneres genannt, das dem äußeren Ende (3A) des Messkanals (3) gegenüberliegt, zu messen, wobei die gemessene Lichtintensität von einem Einfallswinkel (α1, α2) einer Lichtstrahlung (R) abhängt, die durch das äußere Ende (3A) in den Messkanal (3) eintritt, wobei der Einfallswinkel (α1, α2) von der Länge (L1, L2) des durchgehenden Messkanals (3) abhängt und somit von der Dicke (E1, E2) des Werkstücks (2);
- einen Berechnungsschritt, der darin besteht, die Differenz zwischen der gemessenen Lichtintensität und einer Referenz-Lichtintensität zu berechnen; und
- einen Verarbeitungsschritt, der darin besteht, eine Veränderung (ΔE) der Dicke des Werkstücks (2) zu erfassen, wenn die Differenz zwischen der gemessenen Lichtintensität und der Referenz-Lichtintensität einen vorbestimmten Schwellenwert überschreitet.

2. Verfahren nach Anspruch 1,
**dadurch gekennzeichnet, dass** der Messschritt darin besteht, auch die Referenz-Lichtintensität am Ausgang des Messkanals (3) zu messen.

3. Verfahren nach Anspruch 2,
**dadurch gekennzeichnet, dass** der Messschritt darin besteht, die Lichtstrahlung (R) am Ausgang des Messkanals (3) in zwei Lichtstrahlen (F1, F2), zur Messung genannt, zu trennen, wobei die Lichtintensität eines (F1) der Lichtstrahlen zur Messung direkt als gemessene Lichtintensität gemessen wird, und die Lichtintensität des anderen Lichtstrahls zur Messung (F2) über eine Steuerung des Einfallswinkels als Referenz-Lichtintensität gemessen wird.

4. Verfahren nach Anspruch 1,
**dadurch gekennzeichnet, dass** die Referenz-Lichtintensität, die im Verarbeitungsschritt verwendet wird, ein vorbestimmter Wert ist.

5. Verfahren nach einem der vorhergehenden Ansprüche, **dadurch gekennzeichnet, dass** der Verarbeitungsschritt darin besteht, zu folgern, dass:
- Die Dicke des Werkstücks (2) zugenommen hat, wenn die gemessene Lichtintensität um mindestens den Schwellenwert unter der Referenz-Lichtintensität liegt; und
- die Dicke des Werkstücks (2) abgenommen hat, wenn die gemessene Lichtintensität um mindestens den Schwellenwert größer ist als die Referenz-Lichtintensität.

6. Verfahren nach einem der vorhergehenden Ansprüche, **dadurch gekennzeichnet, dass** der Verarbeitungsschritt darin besteht, die Länge der Veränderung der Dicke des Werkstücks (2) in Abhängigkeit vom Wert und dem Vorzeichen der im Berechnungsschritt berechneten Differenz zu bewerten.

7. Vorrichtung (1) zur Erfassung und/oder Bewertung einer Veränderung der Dicke eines Werkstücks, wobei die Vorrichtung das Werkstück umfasst, **dadurch gekennzeichnet, dass** das Werkstück einen durchgehenden Messkanal (3) beinhaltet, dessen Länge gleich der Dicke (E1, E2) des Werkstücks (2) im Bereich des Messkanals (3) ist, der im Werkstück (2) ausgeführt ist, und an einem ersten Ende (3A), äußeres genannt, im Bereich einer äußeren Fläche (2A) des Werkstücks (2) ausmündet; und dass die Vorrichtung beinhaltet:
- Mindestens eine Messeinheit (4), die konfiguriert ist, um mindestens eine Lichtintensität am Ausgang des Messkanals (3) an einem zweiten Ende (3B), inneres genannt, das dem äußeren Ende (3A) des Messkanals (3) gegenüberliegt, zu messen, wobei die gemessene Lichtintensität von einem Einfallswinkel (α1, α2) einer Lichtstrahlung (R) abhängt, die durch das äußere Ende (3A) in den Messkanal (3) eintritt, wobei der Einfallswinkel (α1, α2) von der Länge (L1, L2) des durchgehenden Messkanals (3) abhängt und somit von der Dicke (E1, E2) des Werkstücks (2);
- eine Recheneinheit (5), die konfiguriert ist, um die Differenz zwischen der gemessenen Lichtintensität und einer Referenz-Lichtintensität zu berechnen; und
- eine Verarbeitungseinheit (7), die konfiguriert ist, um eine Veränderung (ΔE) der Dicke des Werkstücks (2) zu erfassen, wenn die Differenz zwischen der gemessenen Lichtintensität und der Referenz-Lichtintensität einen vorbestimmten Schwellenwert überschreitet.

8. Vorrichtung nach Anspruch 7,
**dadurch gekennzeichnet, dass** die Verarbeitungseinheit (7) konfiguriert ist, um die Länge der Veränderung der Dicke des Werkstücks (2) in Abhängigkeit vom Wert und dem Vorzeichen der von der Recheneinheit (5) berechneten Differenz zu bewerten.

9. Vorrichtung nach einem der Ansprüche 7 und 8,
**dadurch gekennzeichnet, dass** die Messeinheit (4) ein Emissionsspektrometer oder ein Photometer beinhaltet.

10. Vorrichtung nach einem der Ansprüche 7 bis 9,
**dadurch gekennzeichnet, dass** sie einen Strahlteiler (11) beinhaltet, der konfiguriert ist, um die Lichtstrahlung (R), die aus dem Messkanal (3) austritt, in zwei Lichtstrahlen (F1, F2), der Messung genannt, zu trennen, von denen einer (F1) zur Messeinheit (4) gerichtet ist und der andere (F2) zu einer Hilfsmesseinheit (12) gerichtet ist, die konfiguriert ist, um die Referenz-Lichtintensität zu messen.

11. Vorrichtung nach einem der Ansprüche 7 bis 9,
**dadurch gekennzeichnet, dass** sie einen Speicher (17) beinhaltet, der mindestens einen vorbestimmten Wert der Referenz-Lichtintensität enthält.

## Claims

1. A method for detecting and/or evaluating a variation in the thickness of a part, **characterised in that** a through measurement channel (3) whose length is equal to the thickness (E1, E2) of the part (2) at said measurement channel (3), is formed in said part (2) having a face (2A) called outer face, said through measurement channel (3) opening at a first end (3A) called outer end at said outer face (2A), and **in that** said method comprises:
- a measurement step consisting in measuring at least one light intensity at the output of the measurement channel (3) at a second end (3B) called inner end, opposite to said outer end (3A) of the measurement channel (3), the measured light intensity depending on an angle of view (α1, a2) of a light radiation (R) entering the measurement channel (3) via said outer end (3A), said angle of view (α1, a2) depending on the length (L1, L2) of the through measurement channel (3) and therefore the thickness (E1, E2) of the part (2);
- a calculation step consisting in calculating the difference between said measured light intensity and a reference light intensity; and
- a processing step consisting in detecting a variation (ΔE) in the thickness of the part (2), when the difference between the measured light intensity and the reference light intensity exceeds a predetermined threshold value.

2. The method according to claim 1, **characterised in that** the measurement step also consists in measuring the reference light intensity at the output of the measurement channel (3).

3. The method according to claim 2, **characterised in that** the measurement step consists in separating the light radiation (R) at the output of the measurement channel (3) into two light beams (F1, F2) called measurement light beams, the light intensity of one (F1) of the measurement light beams being measured directly as measured light intensity, and the light intensity of the other measurement light beam (F2) being measured via a control of the angle of view as reference light intensity.

4. The method according to claim 1, **characterised in that** the reference light intensity used in the processing step is a predetermined value.

5. The method according to any one of the preceding claims, **characterised in that** the processing step consists in concluding that:
- the thickness of the part (2) has increased when the measured light intensity is less than the reference light intensity by at least said threshold value; and
- the thickness of the part (2) has decreased when the measured light intensity is greater than the reference light intensity by at least said threshold value.

6. The method according to any one of the preceding claims, **characterised in that** the processing step consists in evaluating the length of the variation in the thickness of the part (2), according to the value and the sign of the difference calculated in the calculation step.

7. A device (1) for detecting and/or evaluating a variation in the thickness of a part, the device comprising said part, **characterised in that** the part includes a through measurement channel (3) the length of which is equal to the thickness (E1, E2) of the part (2) at said measurement channel (3), formed in said part (2) and opening at a first end (3A) called outer end at an outer face (2A) of said part (2); and **in that** the device includes:
- at least one measurement unit (4) configured to measure at least one light intensity at the output of the measurement channel (3) at a second end (3B) called inner end, opposite to said outer end (3A) of the measurement channel (3), the light intensity measured depending on an angle of view (α1, a2) of a light radiation (R) entering the measurement channel (3) via said outer end (3A), said angle of view (α1, a2) depending on the length (L1, L2) of the through measurement channel (3) and therefore on the thickness (E1, E2) of the part (2);
- a calculation unit (5) configured to calculate the difference between said measured light intensity and a reference light intensity; and
- a processing unit (7) configured to detect a variation (ΔE) in the thickness of the part (2), when the difference between the measured light intensity and the reference light intensity exceeds a predetermined threshold value.

8. The device according to claim 7, **characterised in that** the processing unit (7) is configured to evaluate the length of the variation in the thickness of the part (2), according to the value and the sign of the difference calculated by the calculation unit (5).

9. The device according to one of claims 7 and 8, **characterised in that** the measurement unit (4) includes an emission spectrometer or a photometer.

10. The device according to one of claims 7 to 9, **characterised in that** it includes a semi-reflecting mirror (11) configured to separate the light radiation (R) leaving the measurement channel (3) into two light beams (F1, F2) called measurement beams, one of which (F1) is directed towards said measurement unit (4) and the other (F2) is directed towards an auxiliary measurement unit (12) configured to measure the reference light intensity.

11. The device according to one of claims 7 to 9, **characterised in that** it includes a memory (17) containing at least one predetermined value of the reference light intensity.
